# EUROPEAN PATENT SPECIFICATION

(11) **EP 2 070 844 B1**
(45) Date of publication and mention of the grant of the patent: **28.03.2012**
(21) Application number: 09004478.5
(22) Date of filing: 07.11.2006
(51) Int. Cl.: B65G 39/02

(54) **Supporting Roller**
Stützrolle
Rouleau de support

(43) Date of publication of application: 17.06.2009
(62) Divisional of application: 06023161.0
(73) Proprietor: Transmisiones Mecánicas AVE, S.A., 08940 Cornellá de Llobregat (ES)
(72) Inventor: Ambrosio, Vera Valero, 08940 Cornella de LLobregat Barcelona (ES)
(74) Representative: Grünecker, Kinkeldey, Stockmair & Schwanhäusser

(56) References cited:
- EP-A1- 1 155 980
- DE-C1- 4 432 595
- US-A- 5 224 252

## Description

The present invention refers to a supporting roller for a chain and, in particular, to a supporting roller for a chain on the return path of a chain conveyer.

Chain conveyers in food and bottling industries are well known. With the chains of such chain conveyers articles are moved from one place to another. The chains are usually endless chains such that a return path for the chain needs to be provided. This return path is usually below the conveying part. The content of any product which gets broken on the conveying path is poured through the conveying chain onto the chain part of the return path. Also, any dirt or wear debris drops onto the chain on the return path. Usually rollers are provided for supporting the chain on the return path, such that the chain does not hang freely between the ends of the conveyer. The rollers on this return path are, therefore, subject to dirt and flown out product. The rollers, therefore, tend to block easily which then stops them from rotating freely.

From US 5 224 252 A a composite yarn engaging roll for textile machines comprising two semi-cylindrical members is known which is adapted for mounting on the shaft of a machine.

DE 44 32 595 C1 shows a roll consisting of at least two parts that can be engaged. In that case at least one of the parts has an inner cover and an outer cover that is connected at least in sections in one piece with the inner cover. Rolls like that are e.g. used in the food industry.

From e.g. EP 1 155 980 B1, a supporting roller is known which is provided on its outer circumference with a layer of material with a high friction. This layer is mounted on a rigid part which is constructed such that it tightly holds an annular projection which is formed on the inside of the sleeve and can be held tightly between two shoulders of the rigid part.

In this way, high friction between the chain and the supporting roller is given such that, although there is some tendency for the roller to block, the chain will be able to keep the roller rolling.

The fabrication of this supporting roller, however, is difficult and expensive.

It is, therefore, the object of the present invention to provide an improved supporting roller and an improved chain conveyer.

This problem is solved with a supporting roller according to claim 1, and a chain conveyer according to claim 10.

In an example which is useful for understanding the invention, the supporting roller has a first and a second roller part. The first roller part is of a rigid material and the second roller part is of a material with high friction, such as a rubber material.

In this supporting roller, the first roller part is engaged to the second roller part. This means that the rigid part is engaged to the material made of high friction. Here the part which is made of a material with high friction (second roller part) is made such that it may substantially maintain its shape on its own, namely that it is also quite rigid although being made of a rubber material. In fact, the second roller part may be substantially larger than the first roller part.

The parts are formed such that they may be engaged to each other in order to form the final supporting roller. For this engagement, it may be that the first and second roller parts are constructed such that the first roller part is inserted into the second roller part. In this way, it is easily possible to provide the first roller part made of a rigid material on the inside of a bore of the second roller part such that the bore in the first roller part is one which provides contact with a shaft or a rod which is passed through the bore of the rigid material (first roller part).

In order to provide proper engagement between the first and second roller parts, the first roller part may have a plurality of projections. Preferably those projections are aligned on a circle, namely on the inner or outer circumference of the first roller part.

The second roller part may have a plurality of recesses for providing engagement with the first roller part. In order to be able to engage with the projections of the first roller part, the recesses are preferably also aligned along a circle, namely an inner or an outer circumference of the second roller part.

The first roller part may comprise a cylindrical portion, the outer part of which is in contact with the second roller part and the inner part of which provides a bore through which a rod or shaft may be passed. In this way, it is the first (rigid) roller part which is in contact with the rod or shaft such that low friction for the rotation of the roller is given (at least as long as the area between the first roller part and the rod or shaft is clean).

The first roller part may be provided with a rim, preferably at one end of the cylindrical portion, such that the position of the first roller part with respect to the second roller part can be defined after engagement of the first and second roller parts. This is advantageous for well-defined shapes of the supporting roller.

Multiple projections and/or recesses are advantageous in order to engage the first and second roller parts in such a way that rotation of one part around the other part is suppressed. For this, it is particularly advantageous to have multiple projections corresponding to multiple recesses, both of which are aligned on a circle.

Furthermore, of particular advantage is a first roller part which comprises a disk which has a diameter larger than that of the second roller part. The disk may, therefore, protrude from the supporting surface of the supporting roller and, hence, may provide a lateral guiding to a chain supported by the supporting roller.

In order to convey broad chains, it is particularly advantageous to have a supporting roller which comprises two or more parts which are identical to the second roller part, whereby two neighboring supporting rollers are connected to each other by a first roller part and/or a further roller part which is identical to the first roller part. First roller parts may be connected in order to obtain any desired width of a larger supporting roller.

Apart from the first roller part, a third roller part may be engaged to the second roller part. Thereby, it is possible to form the bore of the supporting roller from two independent parts.

For the second roller part, it is beneficial to have two essentially cylindrical portions with different diameters. The outer cylindrical portion serves to provide the support surface for the chain and the inner cylindrical portion may be adapted to receive the first roller part on the inner and/or outer circumference of inner cylindrical portion. Both cylindrical portions of the second roller part are preferably connected to each other by a disk-like portion. This allows for a material-efficient connection of the two essentially cylindrical portions.

The cylindrical portion of the first roller part may be provided with a helical groove on the surface of a bore provided to pass through a rod or shaft.

In accordance with an embodiment of the invention, the supporting roller has at least a first and second part that can be engaged with each other. The first and second parts form a bore through which a shaft or rod can be passed, such that the at least first and second part together completely surround the cross-section of the rod or shaft. In the engaged position the two parts form a supporting roller.

When the at least two parts, however, are not engaged they may be moved away from the shaft in a radial direction. This means that it is possible to remove the parts of the supporting roller without having to pass the supporting roller around one of the ends of the shaft.

This kind of supporting roller provides the advantage that the supporting roller may be exchanged without having to dismount the shaft. The shaft is usually held on its ends which inhibits the passing of a supporting roller which is worn out around the ends of the shaft.

Such supporting rollers of the present invention may be exchanged frequently since no dismounting of the shaft will be necessary and the exchange of the roller can be quickly performed. Frequently changing the support rollers reduces the wear of the conveyor chains and enhances their lifetime.

Inside the bore of the supporting roller there is a helical groove that extends preferably from the center to the end of the bore. Such a bore may transport dirt particles out of the area between the supporting roller and the shaft on which the supporting roller is mounted. This increases the lifetime of the supporting roller.

Preferably the first and second parts are formed such that each part forms a half cylinder with the axes of the half cylinders being co-linear with each other if engaged and/or with the shaft or rod passing through the bore (if provided on a rod or shaft).

Each of the first and second parts provide e.g. half of the circumference of the roller portion which provides the bore for the rod or shaft. Already with two parts which enclose the shaft when they are engaged, but however may be removed from the shaft when disengaged, allow for an easy replacement of the supporting roller. It may, however, also be possible that three or more parts are connected together in order to form the supporting roller and which can be removed from the shaft when disengaged.

At least one of the first and second parts has projecting pins so as to provide engagement of the two parts with each other.

The projecting pins preferably project from a surface of the first part which is in contact with the second part or faces towards the second part when the first and second parts are engaged. In this way, the projecting pins may remain within the volume which is enclosed by the supporting roller and, hence, allows for compact supporting rollers.

The second part preferably has two holes through which the projecting pins are passed for engagement. Such through-holes allow the projecting pins to pass through such that the stability of the connection between the two parts is given since a projecting pin passing through a through-hole of the other part restricts the possible movements of the two parts relative to each other. On the other hand, such through-holes may be used to provide recesses which allow for different portions to engage with each other.

Apparently the first and/or second part(s) comprise(s) one/two (co-linear) half-cylindrical portion(s). One half-cylindrical portion may provide a bore in order to pass through a shaft or rod in combination with another half-cylindrical portion of the other part. Further, the other half-cylindrical portions of each part form together the supporting surface of the supporting roller.

Furthermore, it may be advantageous that the outer surface of the first and second parts is covered with a material of high friction such as, for example, rubber.

In accordance with another embodiment of the invention, a chain conveyer has a conveying chain which extends along a transportation path and a return path. Supporting rollers, as mentioned above and below, are provided in the return path in order to support the chain.

Particular examples useful for understanding the invention and embodiments will be explained in the following. Here it is shown in
- Fig. 1: a three-dimensional schematic view of a not claimed supporting roller which is useful for understanding the invention,
- Fig. 2: cross -sections through the first and second parts of the not claimed supporting roller which is useful for understanding the invention,
- Fig. 3: an alternative example of the not claimed supporting roller in a three-dimensional schematic view, provided for better understanding of the invention,
- Fig. 4.: an alternative example in a three-dimensional schematic view of the not claimed supporting roller, provided for better understanding of the invention,
- Fig. 5: a schematic three-dimensional view of two roller parts of an embodiment of the invention when not engaged,
- Fig. 6: a schematic three-dimensional view of an embodiment of a supporting roller with its two parts being engaged.

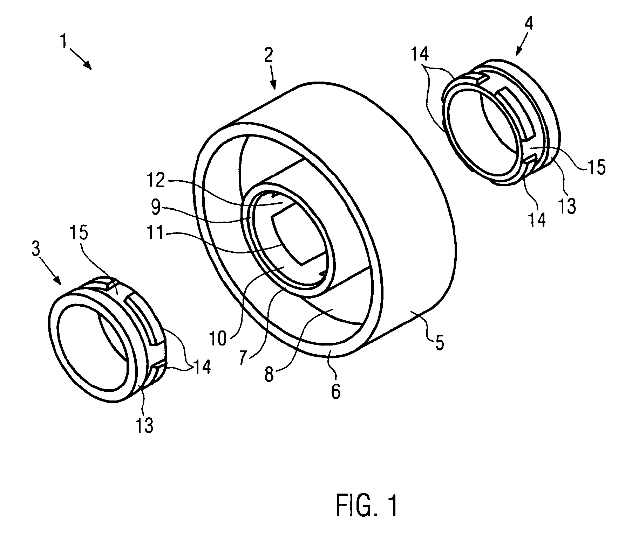

Fig. 1, provided for better understanding of the invention, shows an example of a supporting roller 1 with a first roller part 3 and a second roller part 2. The second roller part 2 is e.g. made of rubber. The roller part 2 has a supporting surface 5 which can be used to support a chain. The supporting surface 5 is the outer surface of an essentially cylindrical portion 6. Another cylindrical portion 7 is provided which has a smaller diameter than the cylindrical portion 6, but is co-linear with the cylindrical portion 6. The two cylindrical portions 6, 7 are connected by a disk-like member 8 which extends between the inner-cylindrical portion 7 and the outer-cylindrical portion 6 in a radial direction.

The inner-cylindrical portion 7 is provided with some recesses 11 and 9 which are provided in order to receive the first roller part 3. This first roller part is made of a rigid material such as a rigid plastic material.

In Fig. 1, a third roller part 4 is shown which is identical to the first roller part 3. Each of those two roller parts 3, 4 has projections 14 which are provided on the outer circumference of a cylindrical portion 15. Each of the roller parts 3, 4, further, have a rim 13.

The first and third roller parts 3, 4 may be inserted into the essentially cylindrical portion 7 such that projections 14 engage with the recesses 11. Thereby, the first and third roller parts 3, 4 engage with the second roller part 2. Those parts engage individually with the second roller part. The first and third roller parts do not engage with each other. They may contact each other or they may be provided with a separation in between them when both are engaged with the second roller part.

Instead of a first roller part 3 and a third roller part 4, also only one roller part 3 and no third roller part may be provided. In this case, it would be advantageous for the cylindrical portion 15 of the first roller part to be longer along the central axis of the supporting roller 1. The first roller then essentially extends up to the backwards end of the inner cylindrical portion 7.

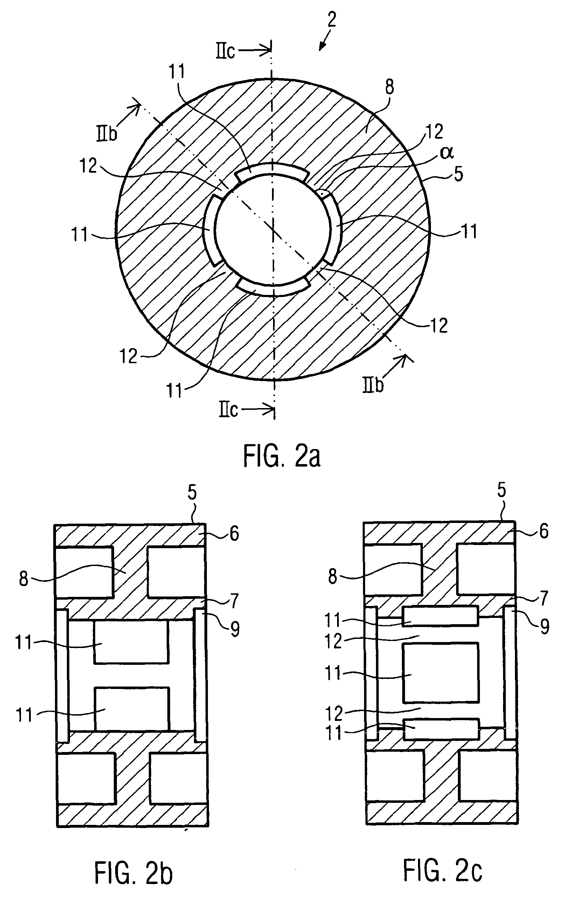

A cut through the second roller part 2 through the disk-like member 8 in a direction perpendicular to the central axis of the supporting roller 1 is shown in Fig. 2a. As can be seen, a cylindrical portion is provided with multiple recesses 11 which are interrupted by portions 12 where no recess is given. A first roller part, which engages into the different recesses 11, is prevented from rotating with respect to the second roller part 2 by the interruptions 12.

The recesses 11 are provided on the inner surface of the essentially cylindrical portion 7 and are provided along the inner circumference of this portion.

Wall portions where the recesses 11 end and which are neighboring to the portions 12 are preferably provided radially in order to avoid slipping of the first roller part in a rotational manner with respect to the second roller part. Those wall portions are oriented perpendicular to the tangential direction (see angle α).

In Fig.'s 2b and 2c cross-sections along lines indicated in Fig. 2a are shown.

In this cross-section the inner and outer cylindrical portion 6, 7 and the disk-like member 8 provide a double-tee structure.

Further, as can be seen in Fig.'s 2b and 2c, at the lateral ends of the second roller part, a recess 9 is provided on the inner cylindrical portion 7. This recess 9 is provided in order to receive the rim 13 such that the first roller part may be completely inserted into the inner cylindrical portion 7 such that it does not protrude from the surface defined by the lateral end of the inner cylindrical portion 7. Nevertheless, the recess 9 may also be smaller than the rim 13, meaning that the first roller part does not entirely fit into the inner cylindrical portion 7.

Further, as can be seen in Fig.'s 2b and 2c, the outer-cylindrical portion 6 and the inner-cylindrical portion 7 have the same widths (horizontal dimension in Fig.'s 2b and 2c). The widths, however, may also be different. In particular, the inner cylindrical portion 7 may have a reduced width in comparison to the outer cylindrical portion 6.

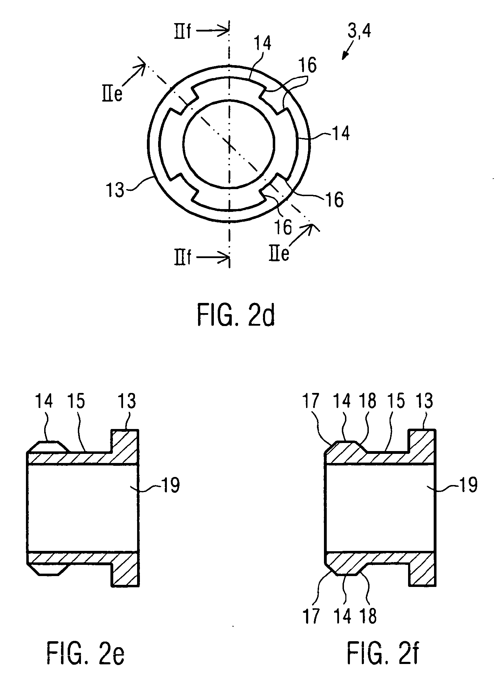

Fig. 2d shows the first roller part in a section perpendicular to the central axis of the supporting roller 1. Projections 14 can be seen which have end walls 16 which are essentially radially aligned. Thereby, they may well fit with the wall portion of the recesses 11 (Fig. 2a).

In Fig. 2e the cross-section along the line indicated in 2d is shown. Here, the cylindrical portion 15 and the rim 13 can be seen. Additionally, it is shown that the first roller part has a bore 19 through which a rod or shaft may be passed. A helical groove may be provided in the surface of the bore 19 to remove dirt when the roller is rotating.

A cross-section as shown in Fig. 2f (see also Fig. 2d) shows the projections 14 in a cross-section. As can be see, the projections 14 in the cross-section of Fig. 2f have slopes 17 and 18. Those slopes facilitate insertion and removal of the first roller part in a direction along the central axis of the supporting roller 1.

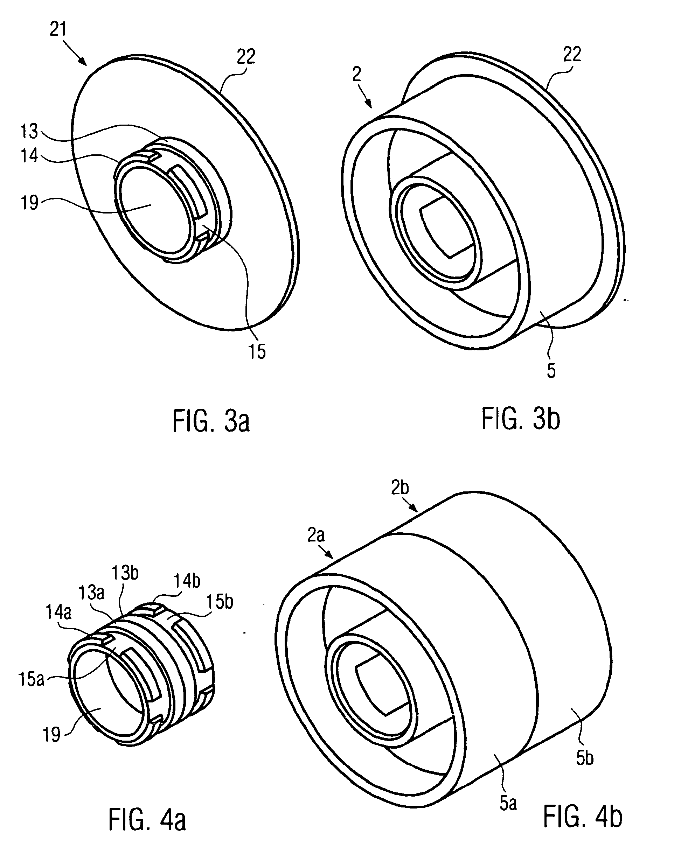

Fig. 3a shows a first roller part which further comprises a disk-portion 22 on one end of the first roller part. In particular the disk-portion 22 is provided adjacent to the rim 13. In Fig. 3b it is shown that this first roller part 21 may be inserted into the second roller part 2 such that the disk 22 projects from the supporting surface 5. This way, the disk 22 may provide a lateral guiding to a chain which runs on the supporting surface 5.

In Fig. 4a a first roller part is shown which is mirror-symmetrical. The first roller part may be engaged to a second roller part 2a on one side and to another second roller part 2b on the other side. Thereby, it is possible to connect two second roller parts 2a, 2b and obtain a supporting roller with a double width. Additionally, three or more second roller parts 2 may be connected by an appropriate number of first roller parts.

Further, any of the second roller parts 2a, 2b or any other connected second roller part may be provided with a first roller part as shown in Fig. 3a.

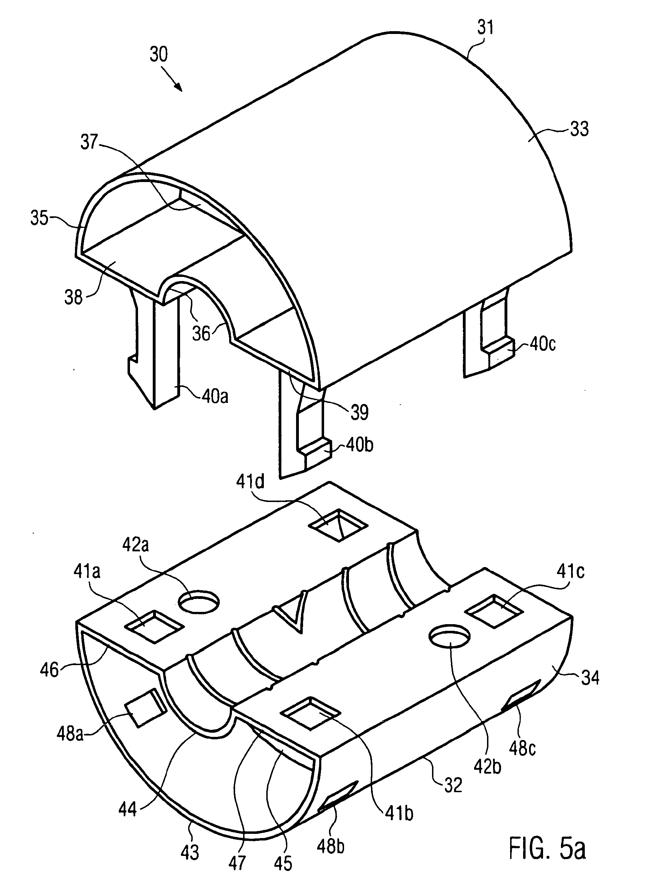

In Fig. 5a, an embodiment is shown where supporting roller 30 has a first part 31 and a second part 32. In Fig. 5a, the two parts are shown when not engaged with each other. The first part 31 has an inner half-cylindrical portion 36 and an outer half-cylindrical portion 35. Those half-cylindrical portions 35, 36 are connected by plane members 37, 38, 39. Members 38, 39 extend in a radial direction along the central axis. Plane member 37 extends in a radial direction perpendicular to the central axis.

Projecting pins 40a, 40b, 40c are shown in Fig. 5a which extend downwards from the plane members 38, 39.

In the lower portion of Fig. 5a, the second part 32 is shown. This part has an outer half-cylindrical portion 43 and an inner half-cylindrical portion 44. Additionally, these two half-cylindrical portions are connected by plane portions 45, 46, 47. The plane portions 46, 47 extend in a plane parallel to and radially away from the central axis. The plane member 45 extends in a direction perpendicular to and radially away from the central axis. The plane members 45, 46, 47 extend between the two half-cylindrical portions 43, 44.

In the plane members 46, 47 some through-holes 41a, 41b, 41c, 41d, 42a, 42b are provided. The projecting pins 40a to 40d (not visible in Fig. 5a) may pass through the through-holes 41 a to 41d. They do not, however, engage with those through-holes and only pass through those through-holes.

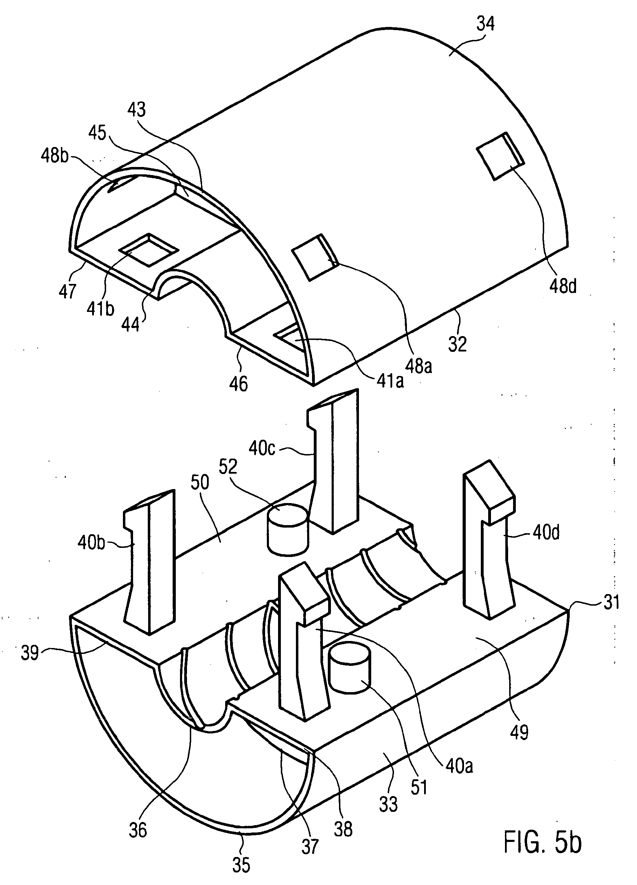

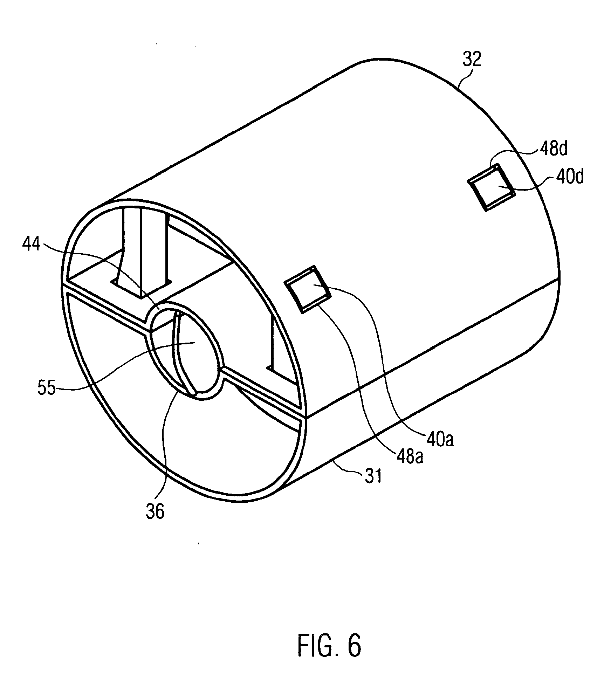

In Fig. 5b, the two roller parts 31, 32 are shown with both parts rotated 180° around their central axis and the two parts interchanged in their position in the figure. In the lower portion of Fig. 5b, the projecting pins 40a to 40d are now clearly visible as they project from the plane members 38, 39. Further in the upper portion of Fig. 5b the second part 32 is shown which has through-holes 48a, 48b, 48d in the outer half-cylindrical portion 43. The projecting pins 40a to 40d may engage with the through-holes 48a, 48b, 48d. Projecting pins 40a to 40d are provided with a sloped surface which partially fills out the through-hole 48a to 48d in the outer surface of the half-cylindrical portion 43 (see Fig. 6).

Furthermore, pins 51, 52 are provided which project from the plane portions 38 and 39 and for which openings 42a, 42b are provided in order to allow proper alignment of the two parts.

At the inner surface of the inner half portions 44, 36 some groove portions are provided.

In Fig. 6, the two parts 31, 32 are shown when engaged. The two parts 31, 32 are engaged with each other by moving the two parts towards each other starting from the position in Fig. 5. The pins 40 are slightly tilted inwards during this movement, but finally snap outwards to engage with the holes 48. For disengaging the two parts the pins have to be moved inwards in order to unlock the engagement, before separating the two parts from each other. Together they form a supporting roller with a continued cylindrical outer surface. Furthermore, the two inner half-cylindrical portions 44, 36 form a cylindrical bore 55 through which a cylindrical shaft or rod may be passed.

Furthermore, as can be seen the sloped surfaces of the pins 40a, 40d are substituting parts of the surface portions missing due to the formation of the through-holes 48a, 48d. Those sloped surfaces 40a, 40d complement the outer cylindrical surface of the supporting roller.

Additionally, it can be seen in Fig. 6 that the grooves on the inside of the inner half-cylindrical portions form helical grooves which extend from the center towards the end and thereby, may remove dirt particles or liquids from the area between a rod or shaft which is passed through the bore 55 of the supporting roller parts.

The outer surfaces of the portions 35 and 43 form the support surface of the supporting roller. On this surface a layer of a material with a high friction such as rubber may be provided on each of the two parts 31, 32 individually. This layer providing a high friction may be glued or laminated on the outer surface or may be provided during injection molding of the layer, of the part 31 or 32 or of both.

## Claims

1. Supporting roller with at least a first and a second part (31, 32) that can be engaged with each other such that:
the first and second part form a bore (55) through which a shaft or rod can be passed such that the at least first and second part (31, 32) completely surround the cross section of the rod or shaft when the at least first and second part are engaged, and
when the at least first and second part are not engaged with each other each part (31, 32) can be moved away from the shaft in a radial direction of the shaft without having to pass the ends of the shaft,
**characterized in that**
the bore (55) is provided with at least one, two three, four or more helical grooves which preferably extend from the centre to the end of the bore (55).

2. Supporting roller according to claim 1, **characterized in that** the first part (31) and/or the second part (32) form a half cylinders with the axis of the half cylinder being collinear with a shaft or rod passed through the bore.

3. Supporting roller according to claim 1 or 2, **characterized in that** the first and/or second part (31, 32) provide half or less of the circumference of roller portion (44, 36) which provides the bore (55) for the shaft or rod.

4. Supporting roller according to any of claims 1 to 3, **characterized in that** the first part (31) has projecting pins (40) for providing engagement with the second part (32).

5. Supporting roller according to claim 4, **characterized in that** the projecting pins (40) project from a surface (49, 50) of the first part (31) which is in contact with or faces to the second part (32) when the fist and the second parts are engaged.

6. Supporting roller according to claim 4 or 5, **characterized in that** the second part (32) has through holes (41, 48) through which the projecting pins (40) are passed for engagement.

7. Supporting roller according to claim 6, **characterized in that** for each projecting pin (40) at least two through holes (41, 48) are provided, wherein the projecting pin passes through one through hole (41) while the second through hole (48) is adapted for engagement with projecting pin (40).

8. Supporting roller according to any of claims 1 to 7, **characterized in that** the first and/or second part comprises two collinear half cylindrical portions (35, 36, 43, 44).

9. Supporting roller according to any of claims 1 to 8, **characterized in that** the outer surface of the at least first and second part (31, 32) is covered with a material with a high friction, such as for example rubber.

10. Chain conveyor with a conveying chain that extends along a transportation path and a return path, wherein
supporting rollers (1) according to any of claims 1 to 9 for supporting the chain along the return path are provided.

## Patentansprüche

1. Stützrolle mit wenigstens einem ersten und einem zweiten Teil (31, 32), die miteinander derart in Eingriff gebracht werden können, dass:
der erste und der zweite Teil eine Bohrung (55) bilden, durch die eine Welle oder eine Stange derart laufen können, dass der erste und der zweite Teil (31, 32) den Querschnitt der Stange oder Welle vollständig umgeben, wenn der wenigstens erste und zweite Teil miteinander in Eingriff stehen, und
wenn der wenigstens erste und zweite Teil nicht miteinander in Eingriff stehen, jeder Teil (31, 32) von der Welle in der radialen Richtung der Welle wegbewegt werden kann, ohne dass er die Enden der Welle passieren muss,
**dadurch gekennzeichnet, dass**
die Bohrung (55) mit wenigstens einer, zwei, drei, vier oder mehr schraubenförmigen Rillen versehen ist, die sich vorzugsweise von dem Zentrum zu dem Ende der Bohrung (55) erstrecken.

2. Stützrolle nach Anspruch 1, **dadurch gekennzeichnet, dass** der erste Teil (31) und/oder der zweite Teil (32) Halbzylinder bilden, wobei die Achse des Halbzylinders mit einer Welle oder einer Stange kollinear ist, die durch die Bohrung verläuft.

3. Stützrolle nach Anspruch 1 oder 2, **dadurch gekennzeichnet, dass** der erste und/oder der zweite Teil (31, 32) höchstens die Hälfte des Umfangs des Rollenabschnittes (44, 36) bilden, der die Bohrung (55) für die Welle oder die Stange bildet.

4. Stützrolle nach einem der Ansprüche 1 bis 3, **dadurch gekennzeichnet, dass** der erste Teil (31) hervorragende Stifte (40) hat, die für den Eingriff mit dem zweiten Teil (32) sorgen.

5. Stützrolle nach Anspruch 4, **dadurch gekennzeichnet, dass** die hervorragenden Stifte (40) von einer Oberfläche (49, 50) des ersten Teils (31) hervorstehen, die den zweiten Teil (32) berührt oder diesem zugewandt ist, wenn der erste und der zweite Teil miteinander in Eingriff stehen.

6. Stützrolle nach Anspruch 4 oder 5, **dadurch gekennzeichnet, dass** der zweite Teil (32) Durchgangslöcher (41, 48) hat, durch die die hervorragenden Stifte (40) zu Engriffszwecken verlaufen.

7. Stützrolle nach Anspruch 6, **dadurch gekennzeichnet, dass** für jeden hervorragenden Stift (40) wenigstens zwei Durchgangslöcher (41, 48) vorgesehen sind, wobei der hervorragende Stift durch ein Durchgangsloch (41) verläuft, während das zweite Durchgangsloch für einen Eingriff mit dem hervorragenden Stift (40) vorgesehen ist.

8. Stützrolle nach einem der Ansprüche 1 bis 7, **dadurch gekennzeichnet, dass** der erste und/oder der zweite Teil zwei kollineare Halbzylinderabschnitte (35, 36, 43, 44) enthält/enthalten.

9. Stützrolle nach einem der Ansprüche 1 bis 8, **dadurch gekennzeichnet, dass** die Außenoberfläche des wenigstens ersten und zweiten Teils (31, 32) mit einem Material hoher Reibung, wie etwa Gummi überzogen, ist.

10. Kettenfördervorrichtung mit einer Förderkette, die sich entlang eines Transportweges und eines Rücklaufweges erstreckt, wobei
Stützrollen (1) nach einem der Ansprüche 1 bis 9 zum Stützen der Kette entlang des Rücklaufweges vorgesehen sind.

## Revendications

1. Rouleau-support comportant au moins une première et une seconde parties (31, 32) pouvant être enclenchées mutuellement, de telle sorte que :
les première et seconde parties constituent un trou (55) au travers duquel peut passer un arbre ou une tige de telle sorte que lesdites première et seconde parties (31, 32) entourent complètement la section transversale de la tige ou de l'arbre lorsque lesdites première et seconde parties sont enclenchées ; et
lorsque lesdites première et seconde parties ne sont pas enclenchées mutuellement, chaque partie (31,32) peut être déplacée à l'écart de l'arbre, selon une direction radiale de l'arbre, sans que le passage des extrémités de l'arbre soit effectué,
**caractérisé en ce que**
le trou (55) est muni d'au moins une, deux, trois ou quatre rainures hélicoïdales, ou plus, qui se prolongent préférablement entre le centre et l'extrémité du trou (55).

2. Rouleau-support selon la revendication 1, **caractérisé en ce que** la première partie (31) et/ou la seconde parties (32) constitue(nt) un demi-cylindre, l'axe du demi-cylindre étant colinéaire d'un arbre ou d'une tige traversant le trou.

3. Rouleau-support selon la revendication 1 ou 2, **caractérisé en ce que** la première et/ou la seconde parties (31,32) constitue(nt) la moitié, au moins, de la circonférence de la partie de rouleau (44, 36) qui contient le trou (55) de l'arbre ou de la tige.

4. Rouleau-support selon l'une des revendications 1 à 3, **caractérisé en ce que** la première partie (31) possède des barrettes saillantes (40) pour assurer l'enclenchement avec la seconde partie (32).

5. Rouleau-support selon la revendication 4, **caractérisé en ce que** les barrettes saillantes (40) se prolongent à partir d'une surface (49, 50) de la première partie (31) qui se trouve au contact de, ou en opposition avec, la seconde partie (32) lorsque les première et deuxième parties sont enclenchées.

6. Rouleau-support selon la revendication 4 ou 5, **caractérisé en ce que** la seconde partie (32) possède des trous traversants (41, 48) au travers desquels passent les barrettes saillantes (40) pour assurer un enclenchement.

7. Rouleau-support selon la revendication 6, **caractérisé en ce que**, pour chaque barrette saillante (40), il existe au moins deux trous traversants (41, 48), dans lequel la barrette saillante traverse un trou traversant (41) alors que le second trou traversant (48) est conçu pour s'enclencher avec la barrette saillante (40).

8. Rouleau-support selon l'une quelconque des revendications 1 à 7, **caractérisé en ce que** la première et/ou la seconde partie comporte(nt) deux parties semi-cylindriques colinéaires (35, 36, 43, 44).

9. Rouleau-support selon l'une quelconque des revendications 1 à 8, **caractérisé en ce que** la surface extérieure desdites première et seconde parties (31, 32) est couverte d'un matériau possédant des propriétés de frottement élevées, comme, par exemple, du caoutchouc.

10. Convoyeur à chaîne possédant une chaîne de transport, se prolongeant le long d'une trajectoire de transport et d'une trajectoire de retour, dans lequel
sont mis en oeuvre des rouleaux-supports (1), selon l'une quelconque des revendications 1 à 9, destinés à supporter la chaîne le long de la trajectoire de retour.
